# EUROPEAN PATENT APPLICATION

(11) **EP 1 983 748 A1**
(43) Date of publication of application: **22.10.2008**
(21) Application number: 07007936.3
(22) Date of filing: 19.04.2007
(51) Int. Cl.: H04N 7/14

(54) **Virtual camera system and instant communication method**

(71) Applicant: Imagetech Co., Ltd., 106 Taipei T'ai pei (TW)
(72) Inventor: Lin, San Wei, Yilan County 265 (TW); Lin, Chih-Mao, Keelung City 200 (TW); Weng, Chen-Hsiu, Taipei County 235 (TW); Kuo, Yon-Fon, Taichung City 400 (TW)
(74) Representative: Manasse, Uwe

(57) **Abstract**

The present invention discloses a virtual camera system and an instant communication method. The virtual camera system comprises a multimedia imaging unit, a virtual camera unit, an instant communication unit and a display unit, wherein the multimedia imaging unit outputs a video data; the virtual camera unit is coupled to the multimedia imaging unit for receiving and processing the video data, and outputting a processed video data; the instant communication unit is coupled to the virtual camera unit for receiving the processed video data and transmitting the processed video data to a remote electronic device through an instant messenger network; and the display unit provides a screen for displaying the processed video data.

## Description

### BACKGROUND OF THE INVENTION

### Field of the Invention

The present invention relates to a virtual camera system and an instant communication method, and more particularly to a virtual camera system and an instant communication method that integrate an instant information communication software with a virtual camera unit.

### Description of the Related Art

People usually interact with instant messaging communications through network (such as Internet or Intranet) for latest information and images, such as text files, instant voice conversations, instant images or multimedia audio/video interactions. Thus, people with lots of pressure their daily life pay more attention to the way of how to build a complete camera system and integrate an instant communication method to conduct instant messaging communications and image information transmissions, or even provide more multimedia audio/video or special effect images to improve the interactivity and the fun of communications.

At present, camera systems and instant communication methods are well-known already. In addition to a computer system, the camera system also requires other equipments including a webcam and a set of speaker and microphone to go with related application program and drivers for operation. In other words, the required equipments include an installed webcam and an instant messaging (IM) application, such as MSN and Yahoo Messenger or a network telephone program such as Skype together, so that users can conduct instant communications and interactions with text file transmissions, instant voice conversations or image transmissions via network.

However, the prior art still has the following drawback. The instant messaging application allows users to transmit a multimedia file with each other and play the multimedia file only after the users have downloaded the multimedia file completely. Although the instant messaging application allows users to transmit instant images through the webcam, its multimedia image processing functions are unsatisfactory to users. For instance, video data cannot be processed while the video data is being retrieved and transmitted. Further, the IM application does not come with the functions of adding an audio/video special effect, producing a virtual image, creating an animated virtual reality or conducting an image interaction. After the webcam is removed, the computer screen cannot display images anymore, and users cannot transmit images through the network. Further, the webcam does not have the functions of recognizing a specific portion (such as a face) and real-time image tracking, and thus the prior art cannot real-time capture and track an image while retrieving the image, or integrate the image with a user's selected virtual subject to form an animated special effect or a virtual reality, so as to improve the interactivity and the fun of communications.

In view of the foregoing shortcomings of the prior art, the inventor of the present invention based on years of experience in the related industry to conduct extensive researches and experiments, and finally developed a virtual camera system and an instant communication method in accordance with the present invention to satisfy consumer requirements and overcome the shortcomings of the prior art.

### Summary of the Invention

The primary objective of the present invention is to overcome the foregoing shortcomings of the prior art by providing a virtual camera system and an instant communication method, and more particularly to an integration of special dynamic effect imaging technology and instant information communication software, which is applied for transmitting an instant message via a network to satisfy user requirements for a virtual camera system. In addition to the transmission of a playing multimedia image through the instant information communication software, the invention also provides the functions of processing image with special effect, recognizing a specific image portion and real time tracking an image to improve the fun of the instant messaging application when a webcam is installed.

To achieve the foregoing objective, the present invention provides a virtual camera system, comprising a multimedia imaging unit, a virtual camera unit, an instant communication unit and a display unit. The multimedia imaging unit is provided for outputting a video data. The camera unit is coupled to the multimedia imaging unit for receiving and processing the video data, and output a processed video data. The instant communication unit is coupled to the virtual camera unit for receiving the processed video data, and transmitting the processed video data to a remote electronic device through an instant messenger network. The display unit provides a screen for displaying the processed video data.

To achieve the foregoing objective, the present invention provides an instant communication method, comprising the steps of:
(a) outputting a video data from a multimedia imaging unit;
(b) receiving and processing the video data through a virtual camera unit coupled to the multimedia imaging unit, and outputting a processed video data by the virtual camera unit;
(c) receiving the processed video data and transmitting the processed video to a remote electronic device through an instant messenger network by an instant communication unit coupled to the virtual camera unit; and
(d) using a display unit to provide a screen to display the processed video data.

To make it easier for our examiner to understand the technical characteristics and performance of the present invention, we use a preferred embodiment with the attached drawings for the detailed description of the invention.

### BRIEF DESCRIPTION OF THE DRAWINGS

FIG 1 is a block diagram of a virtual camera system of the present invention;
FIG 2 is a schematic view of a virtual camera system in accordance with a preferred embodiment of the present invention;
FIG 3 is a block diagram of a virtual camera unit in a virtual camera system of the present invention; and
FIG 4 is a flow chart of an instant communication method of the present invention.

### DETAILED DESCRIPTION OF THE PREFERRED EMBODIMENTS

For simplicity, like numerals are used for like elements for the description of the virtual camera system and instant communication method of the present invention as follows.

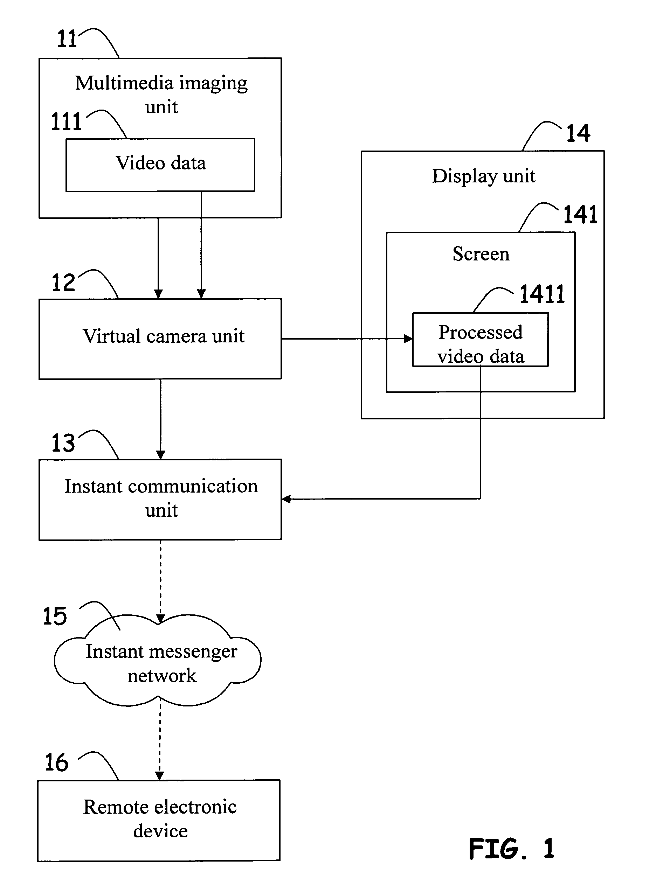

Referring to FIG 1 for a block diagram of a virtual camera system of the present invention, the virtual camera system comprises a multimedia imaging unit 11, a virtual camera unit 12, an instant communication unit 13 and a display unit 14. The multimedia imaging unit 11 is a multimedia player program or an image effect processing program for outputting a video data 111. If the multimedia imaging unit 11 is a multimedia player program, the multimedia player program is used to play a multimedia file to generate and output the video data 111. If the multimedia imaging unit 11 is a an image effect processing program, an image effect processing program will connect a webcam for instantly receiving an image facing the webcam, and process a real time image provided by the webcam based on a special effect instruction description and a media element to generate the video data 111. The image effect processing program further comprises the function of recognizing a specific portion of a real-time image or tracking an instant change of an image to integrate a special effect instruction description, a media element and a real time image to generate the video data 111. In general, the special effect instruction description is a special effect instruction set selected from a description language for producing a special effect action, an interactive effect or a virtual image, and the media element is a multimedia audio/video data.

The virtual camera unit 12 is generally a virtual camera driver program coupled to the multimedia imaging unit 11 for receiving and processing the video data 111, and outputting a processed video data 1411. The instant communication unit 13 is an instant messaging application such as MSN or Yahoo Messenger or a network telephone program such as Skype, and the instant communication unit 13 is coupled to the virtual camera unit 12 for receiving the processed video data 1411 and transmitting the processed video data 1411 to a remote electronic device 16 through an instant messenger network 15. Before the processed video data 1411 is transmitted, the instant communication unit 13 sends a user identification information to an instant messaging platform to complete a log in procedure first, and then the processed video data 1411 is transmitted to the remote electronic device 16 which has logged in the instant messaging platform through the instant messenger network 15. Finally, the display unit 14 is generally a liquid crystal display screen, a plasma screen or a cathode ray tube screen that provides a screen 141 for displaying the processed video data 1411.

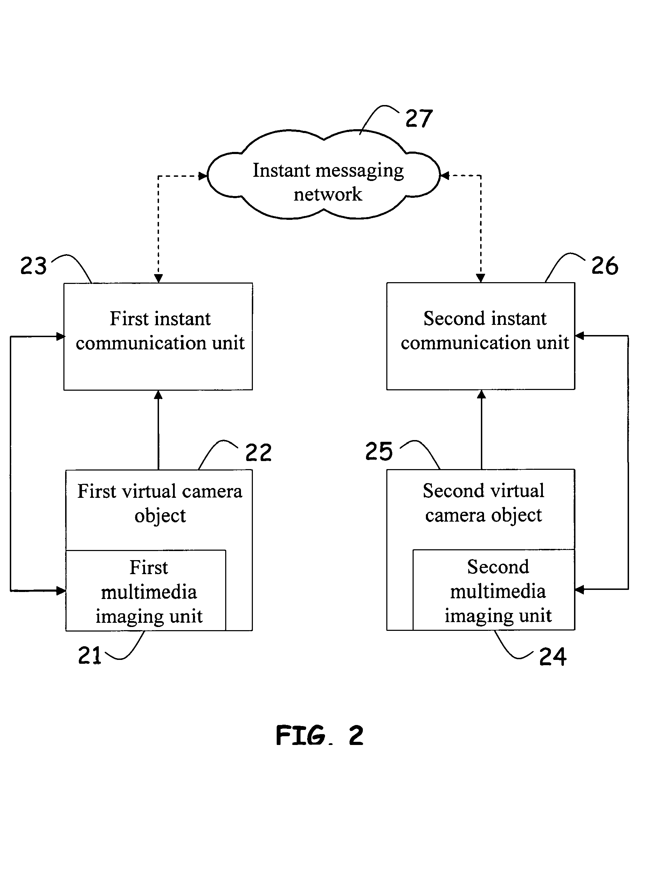

Referring to FIG 2 for a schematic view of a virtual camera system in accordance with a preferred embodiment of the present invention, a user executes a virtual camera driver program for registering a first virtual camera object 22 in the Windows operating system. A special effect image outputted from an application program of a first multimedia imaging unit 21 is sent into the first virtual camera object 22. Then, a communication software of a first instant communication unit 23 (such as MSN) reads data from the first virtual camera object 22 and transmits the data to a remote electronic device through an instant messenger network 27. The remote electronic device of a receiving terminal needs not to install the application program of the multimedia imaging unit to display the special effect images transmitted from the opposite party. On the other hand, the second multimedia imaging unit 24, the second virtual camera object 25 and the second instant communication unit 26 can perform the same aforementioned procedure to provide dynamic special effect audio/video interactions for both parties.

Because the present Instant Messenger (IM) application program such as MSN does not provide an open architecture for related application program interfaces for multimedia conferencing, and thus it is inconvenient to connect external applications, such as the image effect processing program, directly to the IM application program. After the technology of a virtual camera unit is adopted, a user simply selects a virtual camera unit of the present invention for the video modulation, such that, the local user and remote user can both view the dynamic images generated from the virtual camera unit during video communications. If the user uses a multimedia player program coupled to the first virtual camera object 22 (or the second virtual camera object 25), then the images of the multimedia file played by the multimedia player program can be transmitted to a remote electronic device through the first instant communication unit 23 (or the second instant communication unit 26), such that the user's friends can view the images simultaneously without completed download for multimedia file.

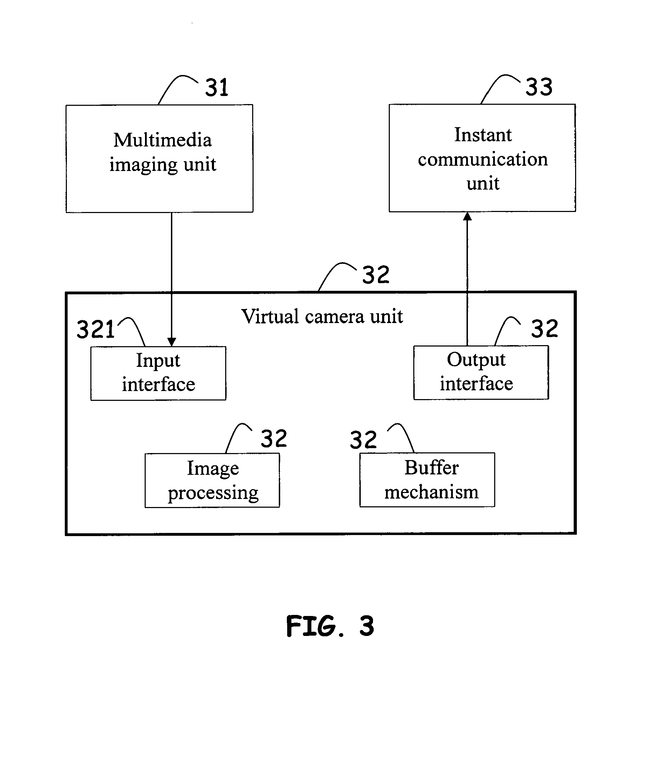

Referring to FIG 3 for a block diagram of a virtual camera unit in the virtual camera system of the present invention, the virtual camera unit 32 is provided for receiving a special effect image processed by an application program of the multimedia imaging unit 31, and converting the received data into a standard format outputted by a virtual camera driver program of the virtual camera unit 32 based on the requirements of the application program (such as MSN) of the instant communication unit 33, and the data is accessed and used by the instant communication unit 33. In addition, the interior of the virtual camera unit 32 is divided into several sections by function: a section of input interface 321, a section of intermediate processing and a section of output interface 324. The section of input interface 321 is provided for writing data into a buffer area, and the section of intermediate processing includes an image processing 322 and a buffer mechanism 323 provided primarily for converting graphic formats and adjusting resolutions, and storing data into a loop buffer area with a size of two pictures, and the section of output interface 324 is provided for reading data from the loop buffer area.

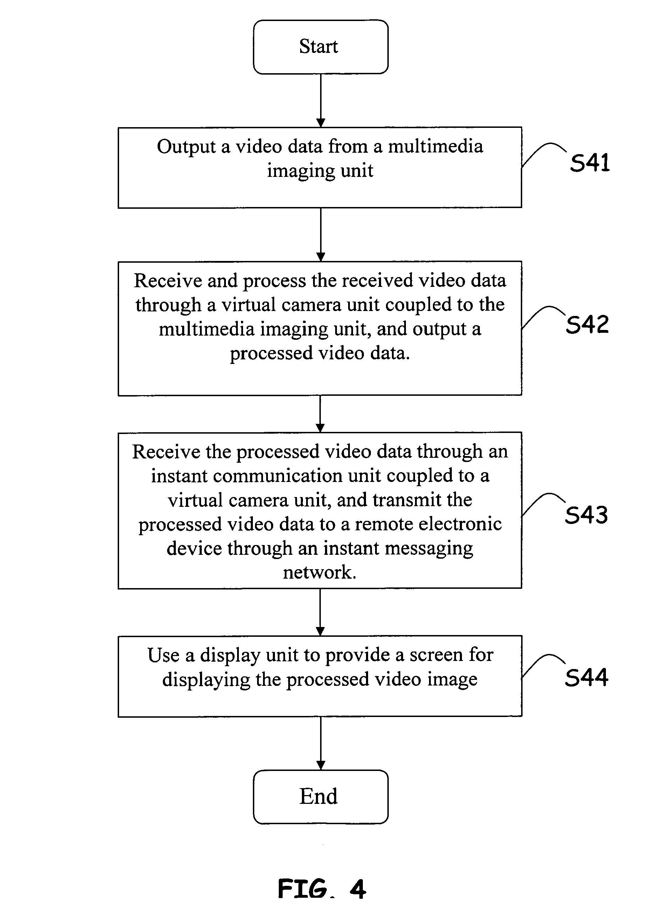

Referring to FIG 4 for a flow chart of an instant communication method of the present invention, the flow chart is corresponding to the block diagram of a virtual camera system as shown in FIG 1, the method comprises the following steps:
Step S41: Output a video data 111 from a multimedia imaging unit 11, wherein the multimedia imaging unit 11 is generally a multimedia player program or an image effect processing program for outputting the video data 111. If the multimedia imaging unit 11 is a multimedia player program, then the multimedia player program will play a multimedia file to generate and output the video data 111. If the multimedia imaging unit 11 is a image effect processing program, then the image effect processing program will connect a webcam to instantly receive an image facing a webcam and process a real time image provided by the webcam based on a special effect instruction description and a media element to generate the video data 111. The image effect processing program further comprises the function of recognizing a specific portion of the real time image or tracking an instant change to integrate a special effect instruction description, a media element and a real time image to generate the video data 111. It is noteworthy to point out that the special effect instruction description generally includes a special effect instruction set selected from a description language for producing a special effect action, an interactive effect or a virtual image, and the media element is a multimedia audio/video data.
Step S42: Receive and process the received video data 111 through a virtual camera unit 12 (which is a virtual camera driver program) coupled to the multimedia imaging unit 11, and output a processed video data 1411.
Step S43: Receive the processed video data 1411 through an instant communication unit 13 including an instant messaging application such as MSN and Yahoo Messenger or a network telephone program such as Skype, the instant communication unit 13 is coupled to the virtual camera unit 12 and transmits the processed video data 1411 to a remote electronic device 16 through an instant messaging network 15. Before the foregoing process takes place, the instant communication unit 13 will send a user identification information to an instant messaging platform to complete a logon procedure first, and then will send the processed video data 1411 to a remote electronic device 16 which has logged in the instant messaging platform through the instant messaging network 15.
Step S44: Use a display unit 14 (such as a liquid crystal display screen, a plasma screen or a cathode ray tube screen) to provide a screen 141 for displaying the processed video data 1411.
The features in the foregoing description, in the claims and/or in the accompanying drawings may, both and in any combination thereof, be material for realising the invention in diverse forms thereof.

## Claims

1. A virtual camera system, comprising:
a multimedia imaging unit, for outputting a video data;
a virtual camera unit, coupled to said multimedia imaging unit, for receiving and
processing said video data to output a processed video data;
an instant communication unit, coupled to said virtual camera unit, for receiving said processed video data from said virtual camera unit and transmitting said processed video data to a remote electronic device through an instant messenger network; and
a display unit, for providing a screen to display said processed video data.

2. The virtual camera system of claim 1, wherein said multimedia imaging unit is a multimedia player program, for playing a multimedia file to generate and output said video data.

3. The virtual camera system of claim 1, wherein said multimedia imaging unit is an image effect processing program, coupled to a webcam, for processing a real time image provided by said webcam to generate said video data based on a special effect instruction description and a media element.

4. The virtual camera system of claim 3, wherein said webcam is provided for instantly receiving an image facing said webcam.

5. The virtual camera system of claim 3, wherein said image effect processing program further comprises recognizing a specific port of said instant image or tracking an instant change of said instant image.

6. The virtual camera system of claim 3, wherein said image effect processing program further comprising an integration of said special effect instruction description, said media element and said instant image for generating said video data.

7. The virtual camera system of claim 3, wherein said special effect instruction description comprises a special effect instruction set selected from a description language, for producing a special effect action, an interactive effect or a virtual image.

8. The virtual camera system of claim 3, wherein said media element comprises a multimedia audio/video data.

9. The virtual camera system of claim 1, wherein said virtual camera unit is a virtual camera driver program.

10. The virtual camera system of claim 1, wherein said instant communication unit comprises an instant messaging (IM) application or a network telephone program (Skype).

11. The virtual camera system of claim 1, wherein said instant communication unit enters a user identification information to an instant messaging platform to complete a log-in procedure and transmits said processed video data to said remote electronic device which has logged in said instant messaging platform through said instant messaging network.

12. The virtual camera system of claim 1, wherein said display unit includes a liquid crystal display screen, a plasma screen or a cathode ray tube screen.

13. An instant communication method, applicable in a virtual camera system, and comprising the steps of:
outputting a video data from a multimedia imaging unit;
receiving and processing said video data to output a processed video data through a virtual camera unit coupled to said multimedia imaging unit;
receiving said processed video data through an instant communication unit coupled to said virtual camera unit, and transmitting said processed video data to a remote electronic device through an instant messaging network; and
using a display unit, for providing a screen to display said processed video data.

14. The instant communication method of claim 13, wherein said multimedia imaging unit is a multimedia player program for playing a multimedia file to generate and output said video data.

15. The instant communication method of claim 13, wherein said multimedia imaging unit is a image effect processing program coupled to a webcam, for processing a real time image provided by said webcam to generate said video data based on a special effect instruction description and a media element.

16. The instant communication method of claim 15, wherein said webcam is provided for instantly receiving an image facing said webcam.

17. The instant communication method of claim 15, wherein said image effect processing program further comprises the function of recognizing a specific portion of said real time image or tracking an instant change of said real time image.

18. The instant communication method of claim 15, wherein said image effect processing program integrates said special effect instruction description, said media element and said real time image for generating said video data.

19. The instant communication method of claim 15, wherein said special effect instruction description includes a special effect instruction set selected from a description language, and said special effect instruction is for producing a special effect action, an interactive effect or a virtual image.

20. The instant communication method of claim 15, wherein said media element comprises a multimedia audio/video data.

21. The instant communication method of claim 13, wherein said virtual camera unit is a virtual camera driver program.

22. The instant communication method of claim 13, wherein said instant communication unit comprises an instant messaging application program or a network telephone program.

23. The instant communication method of claim 13, wherein said instant communication unit enters a user identification information to an instant messaging platform to complete a logon procedure and transmits said processed video data to said remote electronic device which has logged in said instant messaging platform through said instant messaging network.

24. The instant communication method of claim 13, wherein said display unit comprises a liquid crystal display screen, a plasma screen or a cathode ray tube screen.
